(19) Europäisches Patentamt
European Patent Office
Office européen des brevets

(11) Veröffentlichungsnummer: **0 183 142**
**A2**

(12) # EUROPÄISCHE PATENTANMELDUNG

(21) Anmeldenummer: **85114511.0**

(22) Anmeldetag: **15.11.85**

(51) Int. Cl.⁴: **C 09 B 69/02**
C 09 B 62/51

(30) Priorität: **28.11.84 DE 3443305**

(43) Veröffentlichungstag der Anmeldung:
**04.06.86 Patentblatt 86/23**

(84) Benannte Vertragsstaaten:
**CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Meininger, Fritz, Dr.**
**Loreleistrasse 7**
**D-6230 Frankfurt am Main 80(DE)**

(72) Erfinder: **Schläfer, Ludwig, Dr.**
**Königsberger Strasse 40**
**D-6233 Kelkheim (Taunus)(DE)**

(54) **Verfahren zur Herstellung von Lithiumsalzen von anionischen Farbstoffen mit vorzugsweise faserreaktiven Gruppen.**

(57) Lithiumsalze von anionischen Farbstoffen werden hergestellt, indem man ein anderes Salz dieses anionischen Farbstoffes zunächst in wäßriger Lösung oder Suspension mittels einer calciumionenabgebenden Verbindung in das wasserunlösliche oder wasserschwerlösliche Calciumsalz des Farbstoffes überführt, dieses vom wäßrigen Medium abtrennt und es danach in wäßriger Suspension durch Behandlung mit Lithiumsulfat oder Lithiumhydrogensulfat oder einem Gemisch derselben in jeweils äquivalenter Menge oder einem bis zu 10%igen Überschusses in dessen Lithiumsalz überführt.

EP 0 183 142 A2

Croydon Printing Company Ltd.

Verfahren zur Herstellung von Lithiumsalzen von anionischen Farbstoffen mit vorzugsweise faserreaktiven Gruppen

Die gute Löslichkeit der Lithiumsalze von anionischen Farbstoffen im Vergleich zu deren üblichen Natrium- und Kaliumsalzen ist bekannt und in mehreren Druckschriften beschrieben. Um diese Löslichkeitserhöhung zu nutzen, wurde verschiedentlich bereits angestrebt, die Natrium- und Kaliumsalze von Farbstoffen in deren Lithiumsalze überzuführen. Die Verbesserung der Löslichkeit eines Farbstoffes bringt nämlich eine Reihe von Vorteilen mit sich, so z.B., daß keine Ausfällungen während eines Färbe- oder Druckverfahrens erfolgen, die zur Verminderung von Farbausbeuten und zu unegalen fleckigen Färbungen führen würden. Insbesondere ermöglichen jedoch Farbstoffe mit hoher Wasserlöslichkeit die Herstellung von hochkonzentrierten und stabilen, wäßrigen Farbstofflösungen, die in der Anwendung vielfältige Vorteile besitzen und die im Handel erwünscht sind. Die nachträgliche Überführung von anionischen Farbstoffen in ihre Lithiumsalze ist eine solche Möglichkeit der Löslichkeitsverbesserung.

Die Löslichkeitsverbesserung eines anionischen Farbstoffes durch Überführung in dessen Lithiumsalz hat unter anderem den Vorteil, daß anionischen Farbstoffen ohne Änderung des Chromophors weitere vorteilhafte Eigenschaften verliehen werden. In besonderem Maße gilt dies für anionische Farbstoffe mit faserreaktiven Gruppen, wie insbesondere solchen, die alleine oder neben einer anderen faserreaktiven Gruppe eine ß-Sulfatoethylsulfonyl-Gruppe als faserreaktive Gruppe tragen. Farbstoffe dieser Art können durch Alkali- und Elektrolytsalz-Zusatz eine Verringerung ihrer Wasserlöslichkeit erleiden. Alkalisch wirkende Verbindungen und Elektrolytsalze werden beispielsweise bei der Anwendung solcher Farbstoffe in den Druck- und Färbeverfahren eingesetzt; verringert sich hierdurch die Löslichkeit des Farbstoffes, so führt dies zu Ausfällungen des Farbstoffes in der Färbeflotte oder in der Druckpaste mit der Folge, daß farbschwache oder gar unegale und fleckige Färbungen oder Drucke erhalten werden. Die verbesserte Löslichkeit der Lithiumsalze von Farbstoffen verringert jedoch die löslichlichkeitsvermindernde Wirkung von Alkali und Elektrolytsalzen, so daß bei gleicher Farbstoffkonzentration die Färbe- und Druckergebnisse besser sind.

Auch andere faserreaktive anionische Farbstoffe, die voluminöse und hydrophobe faserreaktive Reste besitzen, wie z.B. einen Mono- oder Dichlortriazinyl-, Mono- oder Difluortriazinyl-, den Dichlor-pyridazin- oder Benzodichlorpyridazin-Rest oder den Rest der Dichlorchinoxalincarbonsäure oder den durch Fluor, Chlor oder Mesyl substituierten Rest des Pyrimidins, sind aufgrund dieser Reste in ihrer Löslichkeit und damit in ihrer Anwendungsbreite in Färbe- und Druckverfahren begrenzt. Auch hier erfolgt eine Verbesserung der Löslichkeit und somit der Anwendungsfähigkeit dieser Farbstoffe, wenn sie als Lithiumsalze vorliegen.

Zur Synthese solcher Lithiumsalze bzw. zur Überführung der Natrium- oder Kaliumsalze von anionischen Farbstoffen in die entsprechenden Lithiumsalze wurden deshalb, wie aus der Literatur bekannt, einige Verfahrensweisen ausgearbeitet, die jedoch Nachteile besitzen.

So wird gemäß der US-Patentschrift 3 655 640 das aus der Synthese erhaltene Natriumsalz des dort hergestellten Farbstoffes zunächst durch Neutralisation mittels Schwefelsäure in ein Farbstoffprodukt übergeführt, das in der Säureform dieses Farbstoffes vorliegen soll, aus dem sodann durch Umsetzung mit Lithiumhydroxid das Lithiumsalz des Farbstoffes hergestellt wird.

Nachteile für diese Verfahrensweise ergeben sich insbesondere für anionische faserreaktive Farbstoffe, die in der Regel zwei oder mehr wasserlöslichmachende Gruppen, wie Sulfogruppen, enthalten. Versucht man deren Natrium- oder Kaliumsalze nun durch Säure in die saure Form des Farbstoffes zu überführen, so gelingt dies nicht quantitativ; der Farbstoff fällt - wenn überhaupt - in Form seines sauren Natrium- oder Kaliumsalzes aus. Aus diesem komplexen Farbstoffgemisch können die restlichen Alkaliionen durch wäßrige Lösungen einer Säure, wie der Salz- oder Schwefelsäure, nur mühsam ausgewaschen werden, wobei nicht ausgeschlossen werden kann, daß während dieser langwierigen sauren Behandlung die faserreaktiven Gruppen des Farbstoffes geschädigt werden. Darüber hinaus ergeben sich wegen der großen Mengen an sauren Abwässern Probleme in der Aufbereitung. In vielen Fällen jedoch ist die Ausfällung des Farbstoffes in der Säureform durch Ansäuern überhaupt nicht möglich, da anionische Farbstoffe mit faserreaktiven Gruppen wegen ihrer großen Anzahl an wasserlöslichmachenden Gruppen im Molekül mit Säuren nur unter Zusatz von Natrium- oder Kaliumchlorid ausfällbar und isolierbar sind, so daß deren Überführung in die Lithiumsalze mittels Lithiumhydroxid naturgemäß nicht mehr möglich ist.

In ähnlicher Weise erfolgt nach der europäischen Patentanmeldungs-Veröffentlichung Nr. 0 087 703A die Überführung der aus der Synthese erhältlichen Farbstoff-Natriumsalze in deren Lithiumsalze.

Eine andere Möglichkeit der Herstellung von Lithiumsalzen von Farbstoffen, die allerdings auf solche von 1:2-Metallkomplex-Azofarbstoffen beschränkt ist, wird in der europäischen Patentanmeldungs-Veröffentlichung Nr. 0 077 965A beschrieben; nach ihr erfolgt die Herstellung dieser Lithiumfarbstoffe in der Weise, daß man die Kupplungsreaktion in einem organischen, mit Wasser mischbaren Lösemittel

durchführt und hierbei während der Kupplungsreaktion die pH-Einstellung mittels einer in Wasser alkalisch reagierenden Lithiumverbindung vornimmt, wobei der gebildete Metallkomplex-Azofarbstoff vorwiegend als Lithiumsalz in Lösung bleibt, während anorganische Natriumsalze, wie Natriumchlorid, weitgehend ausfallen. Neben der Spezifität dieses Verfahrens auf Metallkomplex-Azofarbstoffe hat es den Nachteil, daß wassermischbare organische Lösemittel eingesetzt werden müssen, die nur aufwendig wieder aufgearbeitet werden können.

Weiterhin wird in der deutschen Offenlegungsschrift 1 950 097 und in der US-Patentschrift 3 635 944 die Herstellung von Lithiumsalzen von anionischen Azofarbstoffen beschrieben; diese werden jedoch nicht als reine Lithiumsalze, sondern als Lithium-Natrium-Salze erhalten, da bei der Synthese dieser Farbstoffe solche Reagenzien verwendet werden müssen, die als Natriumverbindungen vorliegen; so ist beispielsweise ein für die Diazotierung erforderliches Lithiumnitrit technisch nicht zugänglich, und Zwischenisolierungen durch Ausfällung mit Lithiumchlorid sind nicht möglich.

Auch im Verfahren der britischen Patentschrift 1 318 111 werden Gemische aus Lithium- und Natriumsalzen von anionischen Azofarbstoffen erhalten, da die Überführung der Natriumsalze von faserreaktiven Farbstoffen in die Lithiumsalze zum Zwecke der Löslichkeitsverbesserung des Farbstoffes lediglich durch Zusatz eines wasserlöslichen Lithiumsalzes geschieht.

Mit der vorliegenden Erfindung wurde nun ein Verfahren gefunden, das zu reinen Lithiumsalzen von anionischen Farbstoffen mit gegebenenfalls faserreaktiven Gruppen führt und das die Nachteile der bekannten Verfahren nicht besitzt.

Dieses erfindungsgemäße Verfahren ist dadurch gekennzeichnet, daß man die in anderer Form als Lithiumsalze vorliegenden Farbstoffsalze, wie sie in der Regel aus dem Syntheseansatz erhältlich sind, wie die Natrium- und Kaliumsalze oder Ammoniumsalze von Farbstoffen, zunächst in wäßriger Lösung oder Suspension mittels einer calciumionenabgebenden Verbindung, wie Calciumchlorid, in die wasserunlöslichen oder wasserschwerlöslichen Calciumsalze der Farbstoffe überführt, diese vom wäßrigen Medium abtrennt und sie danach in wäßriger Suspension durch Behandlung mit Lithiumsulfat oder Lithiumhydrogensulfat oder einem Gemisch derselben in jeweils äquivalenter Menge oder eines bis zu 10 %igen, vorzugsweise 5%igen Überschusses, in die Lithiumsalze des Farbstoffes überführt.

Eine erfindungsgemäße Variante dieses Verfahrens ist dadurch gekennzeichnet, daß man direkt von dem Calciumsalz des anionischen Farbstoffes ausgeht, das aus der Farbstoffsynthese erhalten wurde, - bspw. im Falle von Azofarbstoffen durch Kupplung des Calciumsalzes einer Kupplungskomponente mit dem Diazoniumsalz einer Diazokomponente unter Verwendung von alkalisch wirkenden Calciumverbindungen, wie Calciumcarbonat oder Calciumhydroxid, zur Einstellung des erforderlichen pH-Bereiches in der ansonsten in üblicher Weise ausgeführten Kupplungsreaktion, - und dieses Calciumsalz des Farbstoffes in der obengenannten erfindungsgemäßen Weise mit Lithiumsulfat und/oder Lithiumhydrogensulfat umsetzt.

Das bei der Umsetzung des Farbstoff-Calciumsalzes mit dem Lithiumsulfat oder Lithiumhydrogensulfat sich als wasserunlösliche Verbindung abscheidende Calciumsulfat wird anschließend abfiltriert, wobei man ein Filtrat erhält, das das Lithiumsalz des Farbstoffes in praktisch reiner Form gelöst enthält. Im Filtrat noch in äußerst geringer Menge gelöstes Calciumsulfat oder Calciumionen können mittels

einer geringen Menge an Lithiumoxalat vollständig entfernt werden. Das nach Abtrennung von Calciumoxalat erhältliche Filtrat ist nun praktisch frei von Natrium-, Kalium- und Calciumsalzen bzw. -ionen. Das reine Lithiumsalz des Farbstoffes kann aus dieser Lösung in fester Form durch Eindampfen oder Sprühtrocknung gewonnen werden.

Bevorzugt läßt sich jedoch das Filtrat des reinen Farbstoff-Lithiumsalzes selbst, gegebenenfalls nach vorheriger Aufkonzentrierung durch Entzug von Wasser (beispielsweise durch Abdestillierung unter vermindertem Druck) und gegebenenfalls nach Zusatz von vorzugsweise lithiumionen-haltigen Puffersubstanzen zur Einstellung eines pH-Wertes zwischen 3 und 7, der färberischen Verwendung zuführen. Solche konzentrierten wäßrigen Farbstofflösungen haben bekannterweise den Vorzug, leichter anwendbar zu sein, da sie besser dosierbar sind und naturgemäß nicht, wie Farbstoffpulver, stäuben.

Das erfindungsgemäße Verfahren wird beispielsweise in der Weise durchgeführt, daß man eine wäßrige Lösung des Natrium- oder Kaliumsalzes des anionischen Farbstoffes, vorteilhaft die aus der Synthese erhältliche Lösung dieses Farbstoffsalzes, mit einer wäßrigen, möglichst konzentrierten, wie über 10 gew.-%igen, Calciumchloridlösung oder mit Calciumchlorid selbst bei einer Temperatur zwischen 15 und 80°C vermischt, vorzugsweise versetzt. Der Ansatz wird noch einige Zeit weitergerührt, beispielsweise etwa 20 bis 60 Minuten, wobei er auf Raumtemperatur abkühlen kann; gegebenenfalls wird die Suspension des gebildeten Calciumsalzes des Farbstoffes noch auf bis zu 10°C abgekühlt. Das ausgefallene Produkt wird abgetrennt, beispielsweise durch Filtration, und der feuchte Rückstand mit einer wäßrigen Calciumchloridlösung nachgewaschen, um ihn von Alkaliionen im wesentlichen zu befreien.

Das feuchte Calciumsalz des Farbstoffes wird sodann in Wasser aufgeschlämmt oder suspendiert; hierbei kann die Menge an Wasser vorteilhaft gering gehalten werden, sofern die Aufschlämmung oder Suspension noch gut rührbar ist. Sie wird sodann mit der den Calciumionen des Farbstoffes äquivalenten Menge an Lithiumsulfat und/oder Lithiumhydrogensulfat versetzt und einige Zeit weitergerührt; hierfür ist Raumtemperatur, wie 10 bis 30°C, ausreichend; es können jedoch auch Temperaturen bis zu 50°C angewandt werden. Das abgeschiedene Calciumsulfat wird sodann abgetrennt, beispielsweise durch Filtration, und das Filtrat gegebenenfalls zur vollständigen Entfernung von Calciumionen mit einer geringen Menge an Lithiumoxalat, in fester Form oder möglichst konzentrierter Lösung, versetzt.

Das ausgeschiedene Calciumoxalat wird abgesaugt, und es wird nunmehr ein Filtrat erhalten, das das Lithiumsalz des Farbstoffes in reiner Form und praktisch ohne weitere Beimengungen, wie inerten Elektrolytsalzen, enthält. Durch Aufkonzentrieren können in der Regel konzentriertere Farbstofflösungen des Lithiumsalzes erhalten werden, die, vorzugsweise bei einem pH-Wert zwischen 4 und 5, gegebenenfalls mit dem Gehalt an einem Puffer zur Einstellung dieses pH-Bereiches, auch bei einer Lagerung über mehrere Wochen und bei einer Temperatur bis zu 50°C eine hohe Stabilität aufweisen, so keine Ausfällungen an dem Farbstoffprodukt zeigen und auch nach längerer Lagerungszeit unvermindert starke oder praktisch unvermindert farbtiefe und egale Färbungen oder Drucke auf den für diese Farbstoffe geeigneten Fasermaterialien liefern.

Mit dem erfindungsgemäßen Verfahren ist es somit möglich, vorteilhafte konzentrierte und stabile Farbstofflösungen der Lithiumsalze solcher Farbstoffe herzustellen, die handelsfähig und leicht in den Färbereien und Druckereien anwendbar sind.

Zur Überführung von Farbstoffsalzen anionischer Farbstoffe in deren Lithiumsalze nach dem erfindungsgemäßen Verfahren eignen sich alle wasserlöslichen anionischen Farbstoffe mit einer, zwei oder mehreren Sulfo- und/oder Carboxygruppen, vorzugsweise Sulfogruppen, insbesondere auch solche Farbstoffe, die einen faserreaktiven Rest der Vinylsulfon-Reihe, wie einen Rest der später genannten und definierten allgemeinen Formel (2a), oder einen anderen faserreaktiven Rest, wie insbesondere aus der heterocyclischen Reihe, beispielsweise einen der anfangs genannten faserreaktiven Reste, oder beispielsweise einen dieser, insbesondere heterocyclischen, Reste und einen Rest der Vinylsulfon-Reihe, wie den ß-Sulfato-ethylsulfonyl-Rest, gleichzeitig enthalten.

Solche anionischen Farbstoffe sind zahlreich in der Literatur beschrieben oder solchen in der Literatur beschriebenen Farbstoffen analog. Es sind vorwiegend sulfogruppenhaltige metallfreie Azofarbstoffe, Metallkomplex-Azofarbstoffe, Dioxazin-, Formazan-, Phthalocyanin- und Anthrachinonfarbstoffe, bevorzugt solche mit einer oder zwei faserreaktiven Gruppen, so beispielsweise Farbstoffe entsprechend einer allgemeinen Formel (1)

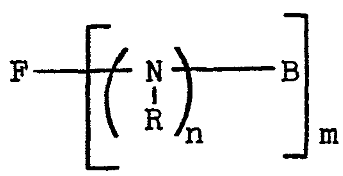

(1)

in welchen F den Rest eines wasserlöslichen Farbstoffes mit 1 bis 8 Sulfogruppen aus der Reihe der metallfreien Mono- und Disazofarbstoffe, der Metallkomplex-, wie 1:1-Kupfer-, 1:2-Chrom- und 1:2-Kobaltkomplex-Mono- und -Disazofarbstoffe, der Dioxazin-, Formazan-, Phthalocyanin- und Anthrachinon-Reihe bedeutet, R ein Wasserstoffatom oder eine Alkylgruppe von 1 bis 4 C-Atomen, wie Ethyl- oder Methylgruppe, ist, n für die Zahl Null oder 1 und m für die Zahl 1 oder 2 stehen und B einen Rest der allgemeinen Formel (2a), (2b), (2c), (2d), (2e), (2f), (2g), (2h), (2j) oder (2k)

$-SO_2-Z$ (2a)

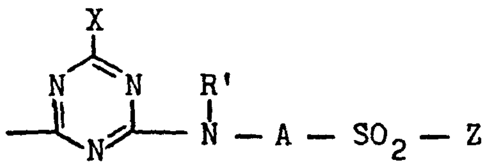

(2b)

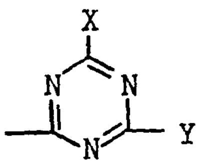

(2c)

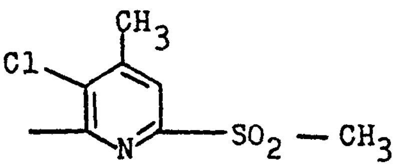

(2d)

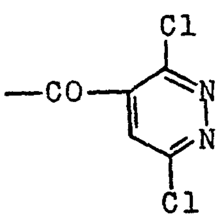

(2e)

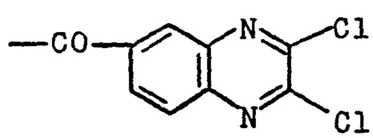

(2f)

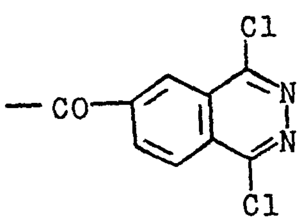

(2g)

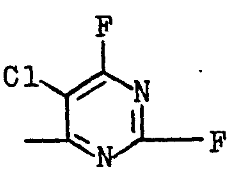

(2h)

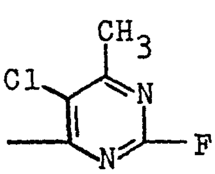

(2j)

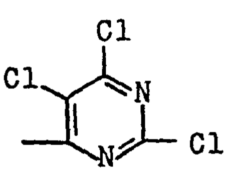

(2k)

ist, in welchen

Z eine ß-Sulfatoethylsulfonyl-, ß-Chlorethylsulfonyl-, ß-Thiosulfatoethylsulfonyl-, ß-Acetyloxyethylsulfonyl- oder Vinylsulfonyl-Gruppe, hiervon bevorzugt eine ß-Sulfatoethylsulfonyl-Gruppe ist,

X ein Chlor- oder Fluoratom bedeutet,

R' ein Wasserstoffatom oder eine Alkylgruppe von 1 bis 4 C-Atomen, wie Ethyl- oder Methylgruppe ist, oder eine Gruppe der allgemeinen Formel (3)

$$— alkylen — SO_2 — Z \qquad (3)$$

ist, in welcher "alkylen" eine Alkylengruppe von 1 bis 6 C-Atomen, bevorzugt 2 bis 4 C-Atomen, wie beispielsweise eine 1,2-Ethylen- oder 1,3-Propylen-Gruppe, bedeutet und Z eine der obengenannten Bedeutungen hat,

A eine Alkylengruppe von 1 bis 6 C-Atomen, bevorzugt 2 bis 4 C-Atomen, wie beispielsweise eine 1,2-Ethylen- oder 1,3-Propylen-Gruppe, bedeutet oder ein Phenylenrest ist, der durch 1 oder 2 Substituenten aus der Gruppe Sulfo, Carboxy, Chlor, Methyl, Ethyl, Methoxy und Ethoxy substituiert sein kann, oder ein Naphthylenrest ist, der durch 1 oder 2 Sulfogruppen substituiert sein kann, und

Y eine Alkoxygruppe der allgemeinen Formel $-O-R^1$ oder eine Aminogruppe der allgemeinen Formel $-NR^2R^3$ bedeutet,

in welchen

$R^1$ eine Alkylgruppe von 1 bis 4 C-Atomen, wie die Methyl- oder Ethylgruppe, ist,

$R^2$ ein Wasserstoffatom oder eine Alkylgruppe von 1 bis 4 C-Atomen, wie insbesondere die Methyl- oder Ethylgruppe bedeutet, die durch eine Hydroxy-, Sulfato- Sulfo-, Carboxy- oder Cyanogruppe substituiert sein kann, beispielsweise die ß-Hydroxyethyl-, ß-Sulfatoethyl- oder ß-Sulfoethyl-Gruppe, und

$R^3$ ein Wasserstoffatom oder eine Alkylgruppe von 1 bis 4 C-Atomen, wie die Methyl- und die Ethylgruppe, ist, die durch eine Hydroxy-, Sulfato-, Sulfo-, Carboxy-, Cyano-, Phenyl- oder Sulfophenyl-Gruppe substituiert sein kann, wie beispielsweise die ß-Hydroxyethyl-, ß-Sulfatoethyl-, ß-Sulfoethyl-, Benzyl-, Phenethyl- und 4-Sulfo-benzyl-Gruppe, oder einen Phenylrest darstellt, der durch 1 oder 2 Substituenten aus der Gruppe Sulfo, Carboxy, Chlor, Methyl, Ethyl, Methoxy und Ethoxy substituiert sein kann, wie insbesondere die 3-Sulfophenyl-Gruppe.

Farbstoffe der allgemeinen Formel (1) sind im besonderen solche Azo- und Metallkomplexazofarbstoffe (so beispielsweise metallfreie Phenyl-azo-naphthol-, Naphthyl-azo-naphthol-, Phenyl-azo-pyrazolon- und Naphthyl-azo-pyrazolon-Farbstoffe und deren 1:1-Kupferkomplexe sowie metallfreie Phenyl-azo-acetoacetylarylid-, Naphthyl-azo-acetoacetylarylid-, Phenyl-azo-pyridon-, Naphthyl-azo-pyridon-, Phenyl-azo-naphthylamin- und Naphthyl-azo-naphthylamin-Farbstoffe, desweiteren beispielsweise metallfreie Phenyl- oder Naphthyl-azo-phenyl-azo-naphthol- und Phenyl- oder Naphthyl-azo-naphthol-azo-naphthol-Farbstoffe und deren 1:1-Kupferkomplex-Farbstoffe), Dioxazin-, wie insbesondere Triphendioxazin-, Formazan-, wie insbesondere Kupferformazan-, Phthalocyanin-, wie insbesondere Kupfer- und Nickelphthalocyanin-, und Anthrachinonfarbstoffe, die eine oder zwei faserreaktive Gruppen enthalten, die aus den Gruppen der allgemeinen Formeln (4a), (4b), (4c), (4d), (4e), (4f), (4g), (4h), (4j), (4k), (4m) und (4n)

$$-SO_2-Z \qquad (4a)$$

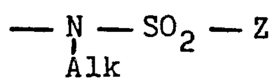

(4b)

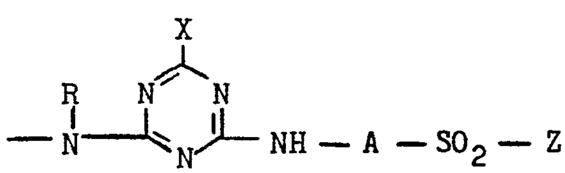

(4c)

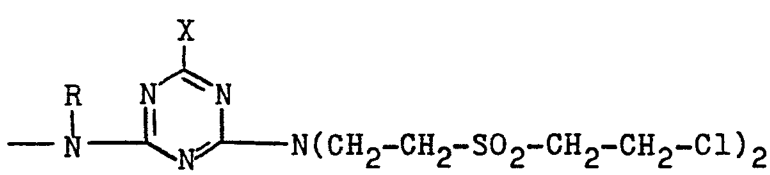

(4d)

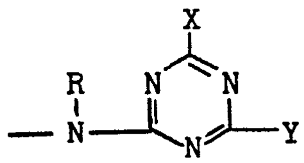
(4e)

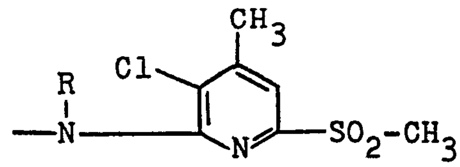
(4f)

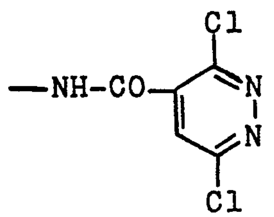
(4g)

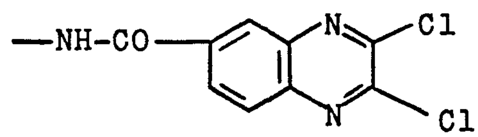
(4h)

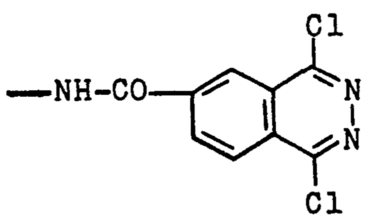
(4j)

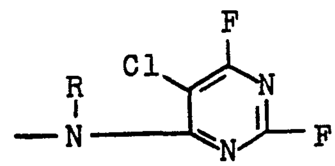
(4k)

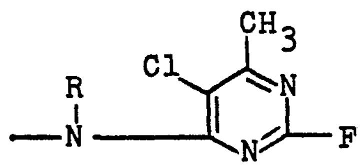
(4m)

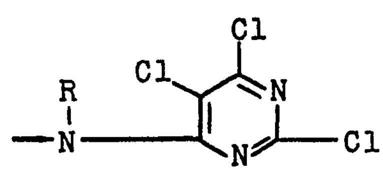
(4n)

ausgewählt sind, in welchen Z, R, X, A und Y die obengenannten Bedeutungen haben, Alk eine Alkylgruppe von 1 bis 4 C-Atomen, wie die Methylgruppe, bedeutet und A bevorzugt einen Phenylenrest bedeutet, der durch 1 oder 2 Substituenten substituiert sein kann, die aus der Gruppe von 1 Sulfo, 1 Carboxy, 1 Chlor, 1 Methyl, 2 Methoxy und 2 Ethoxy ausgewählt sind, der jedoch bevorzugt nicht substituiert ist.

Von den erfindungsgemäß verwendbaren Farbstoffen seien nur beispielsweise die folgenden genannt:

der Azofarbstoff aus 2,5-Dimethoxy-4-(ß-sulfatoethylsulfonyl)-anilin als Diazokomponente und 1-(4-Sulfophenyl)-3-methyl-5-pyrazolon als Kupplungskomponente;

der Azofarbstoff aus 2-Methoxy-5-methyl-4-(ß-sulfato-

ethylsulfonyl)-anilin als Diazokomponente und Aceto-acetyl-(2-methoxy-5-methyl-4-sulfo)-anilid als Kupplungskomponente;

der Azofarbstoff aus 4-Aminobenzol-carbonsäure-(3'-ß-sulfatoethylsulfonyl)-anilid als Diazokomponente und 1-(4-Sulfophenyl)-3-carboxy-5-pyrazolon als Kupplungskomponente;

der Azofarbstoff aus 2-Methoxy-5-methyl-4-(ß-sulfato-ethylsulfonyl)-anilin als Diazokomponente und 1-(4'-Sulfophenyl)-3-methyl-5-pyrazolon als Kupplungskomponente;

der Azofarbstoff aus 3-(ß-Sulfatoethylsulfonyl)-anilin als Diazokomponente und 2-Acetylamino-6-sulfo-8-naphthol als Kupplungskomponente;

der Azofarbstoff aus 4-(ß-Sulfatoethylsulfonyl)-anilin als Diazokomponente und 2-Acetylamino-6-sulfo-8-naphthol als Kupplungskomponente;

der Azofarbstoff aus 4-(ß-Sulfatoethylsulfonyl)-anilin als Diazokomponente udn 3-Acetylamino-6-sulfo-8-naphthol als Kupplungskomponente;

der Azofarbstoff aus 2,5-Dimethoxy-4-(ß-sulfatoethylsulfonyl)-anilin als Diazokomponente und 1-(4'-Sulfophenyl)-3-carboxy-5-pyrazolon als Kupplungskomponente;

der Azofarbstoff aus 2-Amino-1,5-disulfo-naphthalin als Diazokomponente und 3-[N-Methyl-N-(2'-chlor-4'-amino-s-triazin-6'-yl)]-amino-6-sulfo-8-naphthol als Kupplungskomponente;

der Azofarbstoff aus 4-Aminobenzol-carbonsäure-(3'-ß-sulfatoethylsulfonyl)-anilid als Diazokomponente und 1-Acetylamino-3,6-disulfo-8-naphthol als Kupplungskomponente;

der Azofarbstoff aus 2-Methoxy-5-(ß-sulfatoethylsulfonyl)-anilin als Diazokomponente und 5-Sulfo-1-naphthol als Kupplungskomponete;

der Azofarbstoff aus 2-Methoxy-5-(ß-sulfatoethylsulfonyl)-anilin als Diazokomponente und 1-Acetylamino-3,6-di-

sulfo-8-naphthol als Kupplungskomponente,

der Azofarbstoff aus 2-Amino-1-sulfo-6-(ß-sulfatoethylsulfonyl)-naphthalin als Diazokomponente und 1-Benzoylamino-3,6-disulfo-8-naphthol als Kupplungskomponente;

der Anthrachinonfarbstoff 1-Amino-2-sulfo-4-[3'-(ß-sulfatoethylsulfonyl)-phenyl]-amino-anthrachinon;

der Anthrachinonfarbstoff 1-Amino-2-sulfo-4-[2'-carboxy-5'-(ß-sulfatoethylsulfonyl)-phenyl]-amino-anthrachinon;

der Azofarbstoff aus 4-Amino-2-sulfo-diphenylamin als Diazokomponente und 1-(2',4'-Dichlor-s-triazin-6'-yl)-amino-3,6-disulfo-8-naphthol als Kupplungskomponente;

der Kupferkomplex-Azofarbstoff der o,o'-Dihydroxy-Azoverbindung mit 4-Sulfo-2-aminophenol als Diazokomponente und 1-(4'-ß-Sulfatoethylsulfonyl-phenyl)-3-methyl-5-pyrazolon als Kupplungskomponente;

der Azofarbstoff des Beispieles 14 der deutschen Patentschrift 1 644 157;

der Azofarbstoff des Beispieles 2 der deutschen Patentschrift 1 112 225;

der Azofarbstoff aus dem 6. Tab.-beispiel von Spalten 7/8 der deutschen Patentschrift 1 943 904;

der Azofarbstoff des Beispieles 1 der deutschen Auslegeschrift 1 019 025;

der Azofarbstoff des Beispieles 3 der deutschen Patentschrift 1 135 592;

der Azofarbstoff des Tabellenbeispieles 31 der deutschen Patentschrift 1 204 762;

der Azofarbstoff des Beispieles 3 der deutschen Patentschrift 1 644 240;

der Azofarbstoff des Beispieles 1 der europäischen Patentanmeldungs-Veröffentlichung Nr. 0 032 187A;

der Kupferkomplex-Azofarbstoff des Beispieles 45 der deutschen Patentschrift 1 126 542;

der Azofarbstoff des Tabellenbeispieles 3 in Spalte 7 der deutschen Patentschrift 2 142 728;

der Azofarbstoff des Beispieles 1 der deutschen Auslegeschrift 1 062 367;

der Kupferformazanfarbstoff des Beispieles 1 der deutschen Offenlegungsschrift 2 945 537;

der Kupferkomplex-Disazofarbstoff des Tab.-bsp. 1 von Spalten 15/16 der deutschen Patentschrift Nr. 1 544 541;

der Anthrachinonfarbstoff des Beispieles 3 der deutschen Patentschrift 1 117 245;

die Anthrachinonfarbstoffe aus den Beispielen 1 und 2 der deutschen Patentschrift 1 090 630;

der Kupferkomplex-Azofarbstoff des Beispieles 23 der deutschen Auslegeschrift 1 089 098;

die Kupferkomplex-Azofarbstoffe aus dem Beispiel 11 der schweizerischen Auslegeschrift 1472/75;

der Azofarbstoff des Beispieles IV der Europäischen Patentanmeldungs-Veröffentlichung Nr. 0 092 119A;

der Anthrachinonfarbstoff des Beispieles 1 der deutschen Offenlegungsschrift 2 942 364;

der Kupferphthalocyaninfarbstoff des Beispieles 12 der deutschen Auslegeschrift 1 152 493;

der Azofarbstoff des 9. Tabellenbeispieles auf Seite 30 der deutschen Offenlegungsschrift 2 208 972;

der Azofarbstoff des Beispieles 5 der deutschen Auslegeschrift 1 101 657;

der Azofarbstoff des Beispieles 1 der deutschen Auslegeschrift 1 113 050;

der Azofarbstoff des Beispieles 80 der deutschen Offenlegungsschrift 1 644 204;

der Azofarbstoff des Beispieles 394 der deutschen Offenlegungsschrift 1 644 204;

der Disazofarbstoff des Beispieles 49 der deutschen Offenlegungsschrift 2 001 960;

der Disazofarbstoff des Tabellenbeispieles 57 der deutschen Offenlegungsschrift 2 001 960;

der Disazofarbstoff des Beispieles 1 der schweizerischen Patentschrift Nr. 599 316;

der Azofarbstoff des Tabellenbeispieles 15 der deutschen Auslegeschrift 1 191 059;

der Azofarbstoff des Beispieles 1 der deutschen Patentschrift 1 952 261;

der Azofarbstoff des Beispieles 3 der deutschen Offenlegungsschrift 2 232 541;

der Disazofarbstoff des Beispieles 2 der deutschen Offenlegungsschrift 2 733 109;

der Disazofarbstoff des Beispieles 11 der europäischen Patentanmeldungs-Veröffentlichung Nr. 0 042 108A;

der Disazofarbstoff des Beispieles 1 der deutschen Patentschrift 2 748 965;

der Farbstoff mit der Colour-Index-Bezeichnung C.I. Reactive Red 8 (C.I.-Nr. 17908);

der Farbstoff C.I. Reactive Brown 1 (C.I.-Nr. 26440).

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Beispiel 1

600 Volumenteile einer wäßrigen Lösung, die 69 Teile des aus dem Tabellenbeispiel 31 der deutschen Patentschrift Nr. 1 204 762 bekannten Farbstoffes der Formel

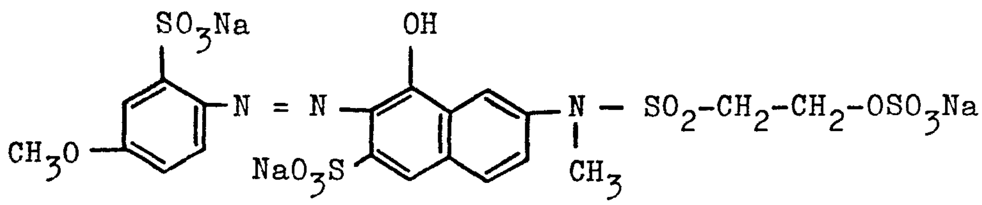

enthält (als wäßrige Lösung kann eine aus der Synthese erhaltene Lösung des Farbstoffes eingesetzt werden), wird mit 75 Teilen Calciumchlorid versetzt und auf 15°C abgekühlt. Das abgeschiedene Calciumsalz dieses Farbstoffes wird abgesaugt und mit 100 Volumenteilen einer 25%igen wäßrigen Calciumchlorid-Lösung gewaschen und gut trocken gesaugt. Dieses feuchte Produkt (170 Teile) wird in 100 Teilen Wasser suspendiert; 22 Teile Lithiumsulfat werden hinzugegeben, das abgeschiedene Calciumsulfat abfiltriert, das Filtrat mit Lithiumoxalat in einer Menge von 0,3 Teilen pro 100 Volumenteile Filtrat versetzt, das ausgefallene Calciumoxalat abgesaugt und das Filtrat mit dem gelösten Lithiumsalz des obengenannten Farbstoffes durch Eindampfen oder durch Verdünnen mit Wasser auf 160 Teile eingestellt. Der Gehalt an dem Lithiumsalz dieses Farbstoffes in der Lösung beträgt ca. 30 %.

Die erhaltene Lösung des Lithiumfarbstoffes besitzt bei einem pH-Wert von 4 - 5 und bei Temperaturen bis zu 50°C eine hohe Lagerstabilität über mehrere Wochen. Bei ihrer Anwendung in technisch üblichen Druck- und Klotzfärbeverfahren für faserreaktive Farbstoffe werden farbstarke, egale rote Drucke und Klotzfärbungen mit guten Naßechtheiten erhalten.

Der Lithiumfarbstoff kann auch in fester Form als elektrolythaltiges Farbstoffpulver erhalten werden, wenn man in

üblicher Weise die Farbstofflösung eindampft bzw. sprühtrocknet.

Beispiel 2

1000 Volumenteile einer Lösung mit etwa 120 Teilen des Farbstoffes der Formel

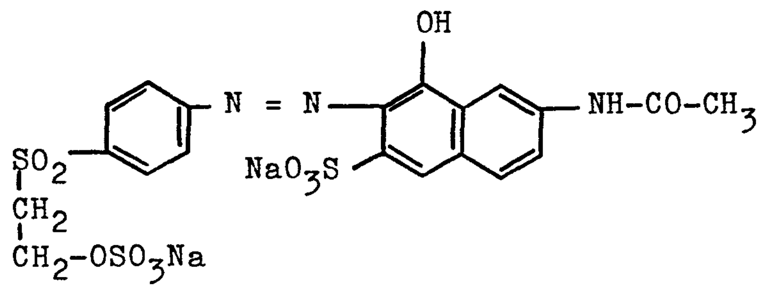

(beispielsweise eine aus der Synthese direkt erhältliche Lösung dieses Farbstoffes) werden mit 150 Teilen Calciumchlorid versetzt und bei einem pH-Wert von 5 bis 7 einige Zeit gerührt. Das abgeschiedene Calciumsalz dieses Farbstoffes wird bei 20°C abgesaugt und mit 350 Volumenteilen einer 15%igen wäßrigen Calciumchloridlösung nachgewaschen. Der feuchte Filterkuchen (etwa 220 Teile) enthält etwa 0,1 % Natriumionen und 4 % Calciumionen; er wird mit 380 Teilen einer wäßrigen Lösung von 24,2 Teilen Lithiumsulfat (d.h. die zur Calciummenge im feuchten Filterkuchen äquivalente Menge an Lithiumsalz) einige Zeit verrührt, das abgeschiedene Calciumsulfat wird abfiltriert und restliche Calciumionen im Filtrat durch Fällung mit Lithiumoxalat entfernt.

Es werden etwa 600 Teile einer Farbstofflösung mit ca. 17% des Lithiumsalzes des obengenannten Farbstoffes erhalten, die eine hohe Lagerstabilität aufweist und in technisch üblichen Druckverfahren und Klotzfärbeverfahren für faserreaktive Farbstoffe sehr gut geeignet ist. Auch nach deren Lagerung bei Temperaturen bis zu 50°C über mehrere Wochen werden farbstarke egale orange Färbungen erhalten.

Der Lithiumfarbstoff kann auch in fester Form als elektrolythaltiges Farbstoffpulver erhalten werden, wenn man in üblicher Weise die Farbstofflösung eindampft bzw. sprühtrocknet.

Beispiel 3

Der Farbstoff der Formel

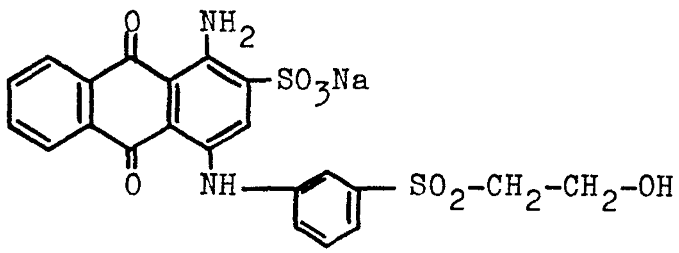

wird mit Schwefelsäure-Monohydrat zur entsprechenden ß-Sulfatoethylsulfonyl-Verbindung verestert, indem 50,2 Teile dieses Farbstoffes bei einer Temperatur zwischen 20 und 50°C in 240 Teile Schwefelsäure-Monohydrat eingetragen werden und die Reaktionsmischung bis zur klaren Lösung gerührt wird, die sodann auf 900 Teile eines Gemisches aus Eis und Wasser gegeben wird. Die saure Lösung wird mit etwa 270 Teilen Calciumcarbonat neutralisiert, das ausgefallene Calciumsulfat abfiltriert und die als Filtrat erhaltene Lösung des Calciumsalzes dieses ß-Sulfatoethylsulfonyl-Farbstoffes mit 12 Teilen Lithiumsulfat versetzt. Es wird einige Zeit weitergerührt und das abgeschiedene Calciumsulfat abgesaugt. Aus diesem Filtrat werden restliche Calciumionen mit Lithiumoxalat ausgefällt.

Das Filtrat stellt eine lagerstabile wäßrige Lösung des Lithiumsalzes dieses ß-Sulfatoethylsulfonyl-Anthrachinonfarbstoffes dar. Eine Farbstofflösung dieses Lithiumfarbstoffes mit einer Konzentration von bis zu 20 Teilen des Farbstoffes in 100 Volumenteilen der Lösung besitzt unverändert gute Lagerstabilität.

Der Lithiumfarbstoff kann auch in fester Form als elektrolythaltiges Farbstoffpulver erhalten werden, wenn man in üblicher Weise die Farbstofflösung eindampft bzw. sprühtrocknet.

Beispiel 4

80 Teile des Farbstoffes der Formel

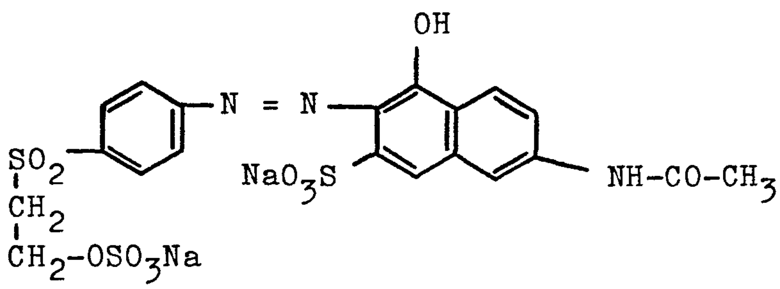

werden bei 60°C in 1000 Teilen Wasser gelöst und mit 150 Teilen Calciumchlorid versetzt. Es wird bis zur Abkühlung auf 20°C weitergerührt, das abgeschiedene Calciumsalz des Farbstoffes abgesaugt und mit etwa 300 Volumenteilen einer 10%igen wäßrigen Calciumchloridlösung gewaschen. Es werden etwa 200 Teile eines feuchten Filterkuchens erhalten, der etwa 0,2 % Natriumionen und 4 bis 5% Calciumionen enthält. Er wird in eine Lösung von 30 Teilen Lithiumsulfat in 300 Teilen Wasser eingerührt. Das ausgeschiedene Calciumsulfat wird sodann abfiltriert, das Filtrat mit Lithiumoxalat von Calciumionen befreit und das ausgeschiedene Calciumoxalat abfiltriert.

Es werden etwa 500 Teile einer wäßrigen Lösung mit etwa 70 Teilen des Lithiumsalzes dieses Farbstoffes erhalten, die auch bei mehrwöchiger Lagerung bei Temperaturen bis zu 50°C eine hohe Lagerstabilität aufweist und danach noch farbstarke orange, egale und echte Färbungen und Drucke nach den für faserreaktive Farbstoffe üblichen Verfahren liefert.

Der Lithiumfarbstoff kann auch in fester Form als elektrolythaltiges Farbstoffpulver erhalten werden, wenn man in üblicher Weise die Farbstofflösung eindampft bzw. sprühtrocknet.

Beispiel 5

Eine Lösung von 128 Teilen des Farbstoffs der Formel

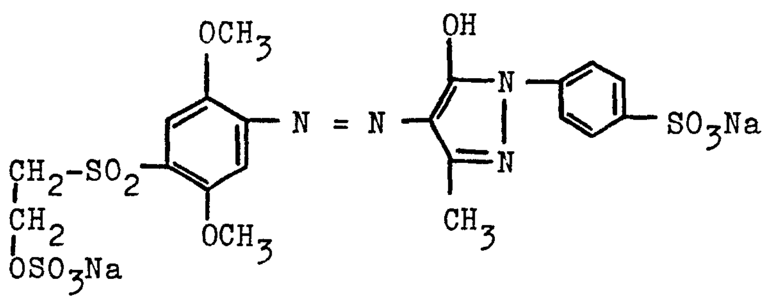

(der in üblicher Weise durch Kupplung von diazotiertem 2,5-Dimethoxy-4-(ß-sulfatoethylsulfonyl)-anilin auf 1-(4-Sulfophenyl)-3-methyl-5-pyrazolon hergestellt werden kann) in 1000 Teilen Wasser wird mit 150 Teilen Calciumchlorid versetzt und einige Zeit nachgerührt. Das ausgeschiedene Calciumsalz des Farbstoffes wird abgesaugt und mit 350 Volumenteilen einer 15%igen wäßrigen Calciumchloridlösung nachgewaschen. Es werden etwa 250 Teile eines feuchten Filterrückstandes mit maximal 0,3 % Natriumionen und 5 % Calciumionen erhalten. Dieser Filterrückstand wird in 350 Teilen Wasser suspendiert und mit 35 Teilen Lithiumsulfat versetzt. Die Suspension wird einige Zeit nachgerührt, das abgeschiedene Calciumsulfat abfiltriert, das Filtrat mit 2 Teilen Lithiumoxalat versetzt und das abgeschiedene Calciumoxalat abgetrennt.

Es werden etwa 600 Teile einer wäßrigen Farbstofflösung des Lithiumsalzes obengenannten Farbstoffes erhalten, die auch bei längerer Lagerung bis zu Temperaturen von 50°C eine gute Stabilität zeigt und danach in den üblichen Färbe-, Klotz- und Druckverfahren für faserreaktive Farbstoffe auf Cellulosefasermaterialien farbstarke und egale Färbungen liefert.

Der Lithiumfarbstoff kann auch in fester Form als elektrolythaltiges Farbstoffpulver erhalten werden, wenn man in üblicher Weise die Farbstofflösung eindampft bzw. sprühtrocknet.

Beispiel 6

1000 Volumenteile einer wäßrigen Lösung von 158 Teilen des aus dem Beispiel 1 der europäischen Patentanmeldungs-Veröffentlichung Nr. 0 032 187A bekannten Farbstoffes der Formel

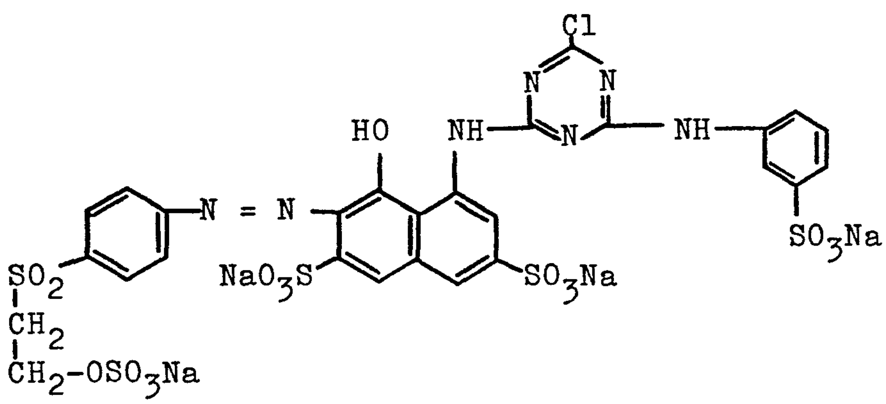

werden mit 200 Teilen Calciumchlorid versetzt und einige Zeit gerührt. Das ausgeschiedene Calciumsalz des Farbstoffes wird abgesaugt und durch Nachwaschen mit 500 Volumenteilen einer 20 %igen wäßrigen Calciumchloridlösung von restlichen Natriumionen befreit. Die erhaltenen ca. 320 Teile des feuchten Filterkuchens mit einem Gehalt von etwa 5 % Calciumionen werden in einer Lösung von 44 Teilen Lithiumsulfat in 300 Teilen Wasser unter gutem Rühren suspendiert. Das abgeschiedene Calciumsulfat wird sodann abgesaugt und mit Wasser farblos gewaschen. Das Filtrat wird mit 3 Teilen Lithiumoxalat versetzt, ausgeschiedenes Calciumoxalat abfiltriert und gewaschen.

Das Filtrat kann durch teilweises Eindampfen zu einer wäßrigen Lösung mit einem Gehalt des Lithiumsalzes dieses Farbstoffes von 30 % konzentriert werden, die auch nach mehreren Wochen bei Temperaturen bis zu 50°C eine hohe Stabilität zeigt, so daß praktisch unverändert farbstarke und egale Färbungen nach den in der Technik für faserreaktive Farbstoffe üblichen Färbeverfahren erhalten werden.

Beispiel 7

Eine Lösung aus 65 Teilen des aus dem Beispiel IV der europäischen Patentanmeldungs-Veröffentlichung Nr. 0 092 119A bekannten Farbstoffes der Formel

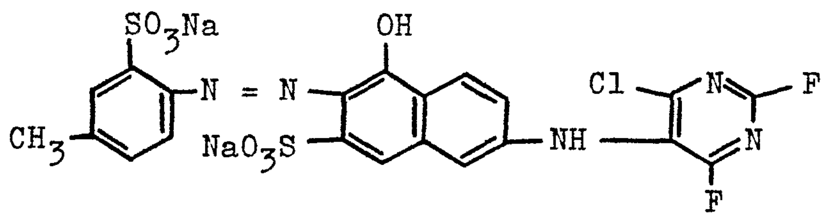

in 450 Teilen Wasser werden mit 75 Teilen Calciumchlorid versetzt und 2 Stunden nachgerührt. Das ausgefallene Calciumsalz dieses Farbstoffes wird abgesaugt und mit 200 Volumenteilen einer 50%igen wäßrigen Calciumchloridlösung gewaschen. Es werden etwa 140 Teile eines feuchten Filterkuchens mit einem Natriumionen-Gehalt von unter 0,1 % und einem Calciumionen-Gehalt von 5,2 % erhalten, der in 500 Teile einer 4 %igen wäßrigen Lithiumsulfatlösung eingerührt wird. Die Suspension wird einige Zeit nachgerührt und von abgeschiedenem Calciumsulfat abfiltriert.

Es werden 550 Teile einer wäßrigen Lösung mit dem Lithiumsalz des obengenannten Farbstoffes erhalten, die eine hohe Lagerstabilität zeigt und auch nach mehrwöchiger Lagerung farbstarke und egale Färbungen liefert.

Der Lithiumfarbstoff kann auch in fester Form als elektrolythaltiges Farbstoffpulver erhalten werden, wenn man in

üblicher Weise die Farbstofflösung eindampft bzw. sprühtrocknet.

Beispiel 8

Man rührt 100 Teile Calciumchlorid in eine Lösung von 73 Teilen des aus Beispiel 1 der deutschen Offenlegungsschrift 2 942 364 bekannten Farbstoffes der Formel

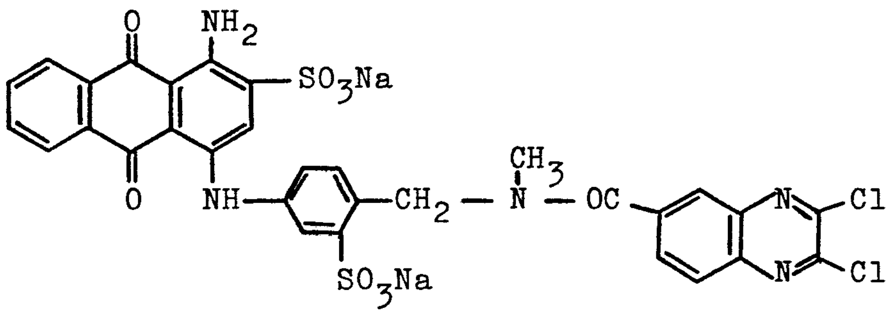

in 900 Teile Wasser ein, rührt einige Zeit nach und saugt das abgeschiedene Calciumsalz dieses Farbstoffes ab und wäscht es mit einer 10%igen wäßrigen Calciumchloridlösung. Die erhaltenen ca. 185 Teile des feuchten Filterkuchens mit einem Calciumgehalt von 4,3 % werden in 730 Teile einer 3%igen wäßrigen Lithiumsulfatlösung eingerührt, die Suspension einige Zeit nachgerührt, abgeschiedenes Calciumsulfat abfiltriert und das Filtrat von restlichen Calciumionen mittels Lithiumoxalat befreit.

Es werden etwa 750 Teile einer wäßrigen Lösung des Lithiumsalzes obengenannten Farbstoffes erhalten, die auch nach längerer Lagerung farbstarke und egale Färbungen auf Cellulosefasermaterialien nach den in der Technik üblichen Färbeverfahren für faserreaktive Farbstoffe liefern.

Beispiel 9

24 Teile 2-Amino-8-naphthol-6-sulfonsäure werden in 50 Teilen Wasser mit 6 Teilen Calciumcarbonat gelöst. Bei 20 bis 60°C gibt man 13 Volumenteilen Acetanhydrid hinzu, neutralisiert das Reaktionsgemisch mit 7 Teilen Calciumhydroxid

und rührt es nach Erwärmen auf 70 bis 80°C noch zwei Stunden nach und läßt es sodann auf Raumtemperatur abkühlen.

Getrennt hiervon stellt man eine neutrale Lösung von 28,1 Teilen 4-(ß-Sulfatoethylsulfonyl)-anilin in 70 Teilen Wasser mit 6 Teilen Calciumcarbonat her, gibt 70 Teile Eis hinzu und diazotiert bei einer Temperatur von 0 bis 10°C im Verlauf von etwa 2 Stunden durch allmähliche Zugabe von 18 Volumenteilen einer 40%igen wäßrigen Nitrosylschwefelsäurelösung. Nach der Diazotierungsreaktion wird überschüssige Nitrosylschwefelsäure durch Amidosulfonsäure zerstört.

In die so erhaltene Suspension des Diazoniumsalzes läßt man den oben erwähnten Ansatz mit dem Calciumsalz der 2-Acetylamino-8-naphthol-6-sulfonsäure als Kupplungskomponente einlaufen, stellt diesen Kupplungsansatz mittels 26 Teilen Calciumcarbonat auf einen pH-Wert von 5 bis 5,5 und rührt bis zur Beendigung der Kupplung nach.

Das ausgefallene Calciumsalz des gebildeten Azofarbstoffes wird abgesaugt. Man erhält etwa 170 Teile eines feuchten Filterkuchens, der neben dem genannten Farbstoff noch Calciumsulfat enthält; er wird in eine 70°C warme wäßrige Lösung mit einem pH-Wert von 4 bis 5 von 11 Teilen Lithiumsulfat in 100 Teilen Wasser eingerührt. Es wird noch eine kurze Zeit nachgerührt und das Calciumsulfat abgesaugt. Das Filtrat (etwa 220 Volumenteile) enthält das Lithiumsalz des in Beispiel 2 beschriebenen Azofarbstoffes; durch Zugabe von 0,7 Teilen Oxalsäure und 0,7 Teilen Lithiumcarbonat wird diese wäßrige Lösung des Lithiumfarbstoffes von restlichen Calciumionen befreit.

Nach Abfiltration des Calciumoxalats erhält man 270 Volumenteile einer wäßrigen, calcium- und natriumionenfreien lagerstabilen Lösung mit 53 Teilen des Farbstoffes

der Formel

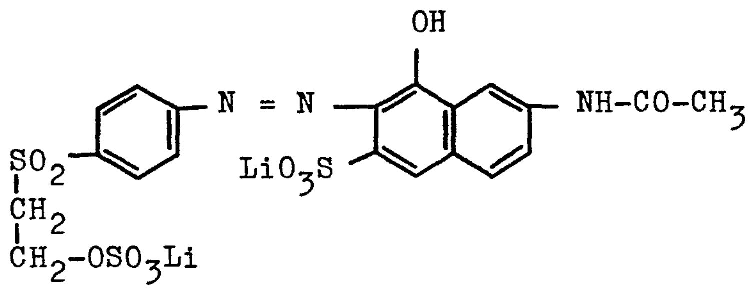

Beispiele 10 bis 27

Die nachfolgenden Tabellenbeispiele beschreiben weitere Lithiumsalze von Farbstoffen, die in erfindungsgemäßer Weise, beispielsweise analog eines der obigen Ausführungsbeispiele, - in Form einer wäßrigen Lösung oder als Salz in fester Form - durch Überführung der Natrium- oder Kaliumsalze des entsprechenden Farbstoffes (wobei vorteilhaft von den aus der Farbstoffsynthese erhältlichen Lösungen dieser Natrium- oder Kaliumsalze ausgegangen werden kann) zunächst in deren Calciumsalz und sodann durch Austausch der Calciumionen dieses Farbstoffes durch Lithiumionen hergestellt werden. Die erhaltenen Lösungen der Lithiumsalze dieser Farbstoffe besitzen ebenfalls eine hohe Lagerstabilität und liefern auch nach mehrwöchiger Lagerung farbstarke und egale Färbungen. Durch Eindampfen oder Sprühtrocknen der Farbstofflösungen können die Lithiumsalze der Farbstoffe in fester Form erhalten werden.

| Bsp. | Lithiumsalz des Farbstoffes, der als Natrium- oder Kaliumsalz in ........ beschrieben ist |
|---|---|
| 10 | Deutsche Auslegeschrift 1 152 493, Beispiel 12 |
| 11 | Deutsche Offenlegungsschrift 2 208 972, Tabellenbeispiel auf Seite 30 |
| 12 | Deutsche Patentschrift 1 644 157, Beispiel 14 |
| 13 | Deutsche Auslegeschrift 1 101 657, Beispiel 5 |
| 14 | Deutsche Auslegeschrift 1 113 050, Beispiel 1 |
| 15 | Deutsche Offenlegungsschrift 1 644 204, Beispiel 80 |
| 16 | Deutsche Offenlegungsschrift 1 644 204, Beispiel 394 |
| 17 | Deutsche Offenlegungsschrift 2 001 960, Beispiel 49 |
| 18 | Deutsche Offenlegungsschrift 2 001 960, Tabellenbeispiel 57 |
| 19 | Schweizer Patentschrift Nr. 599 316, Beispiel 1 |
| 20 | Deutsche Auslegeschrift 1 090 630, Beispiel 1 |
| 21 | Deutsche Auslegeschrift 1 191 059, Tabellenbeispiel 15 |
| 22 | Deutsche Patentschrift 1 952 261, Beispiel 1 |
| 23 | Deutsche Offenlegungsschrift 2 232 541, Beispiel 3 |
| 24 | Deutsche Offenlegungsschrift 2 733 190, Beispiel 2 |
| 25 | Europ. Patentanmeldungs-Veröff. 0 042 108 A, Beispiel 11 |
| 26 | Deutsche Patentschrift 1 943 904, Beispiel 6 der Tabelle in Spalten 7/8 |
| 27 | Deutsche Patentschrift 2 748 965, Beispiel 1 |

Patentansprüche:

1. Verfahren zur Herstellung von Lithiumsalzen von anionischen Farbstoffen, dadurch gekennzeichnet, daß man ein in anderer Form als Lithiumsalz vorliegendes Farbstoffsalz dieses anionischen Farbstoffes zunächst in wäßriger Lösung oder Suspension mittels einer calciumionenabgebenden Verbindung in das wasserunlösliche oder wasserschwerlösliche Calciumsalz des Farbstoffes überführt, dieses vom wäßrigen Medium abtrennt und es danach in wäßriger Suspension durch Behandlung mit Lithiumsulfat oder Lithiumhydrogensulfat oder eines Gemisches derselben in jeweils äquivalenter Menge oder eines bis zu 10%igen Überschusses in dessen Lithiumsalz überführt.

2. Verfahren nach Anspruch 1, dadurch gekennzeichnet, daß man von dem Natrium- oder Kaliumsalz des Farbstoffes ausgeht.

3. Verfahren nach Anspruch 1 oder 2, dadurch gekennzeichnet, daß der Farbstoff eine faserreaktive Gruppe enthält.

4. Verfahren nach einem der Ansprüche 1 bis 3, dadurch gekennzeichnet, daß der Farbstoff eine oder zwei faserreaktive Gruppen der Vinylsulfonreihe enthält.

5. Verfahren nach einem der Ansprüche 1 bis 3, dadurch gekennzeichnet, daß der Farbstoff einen oder zwei faserreaktive Gruppen aus der Chlor- oder Fluor-s-triazinyl-Reihe enthält.

6. Verfahren nach Anspruch 5, dadurch gekennzeichnet, daß der faserreaktive Rest ein Rest der allgemeinen Formel

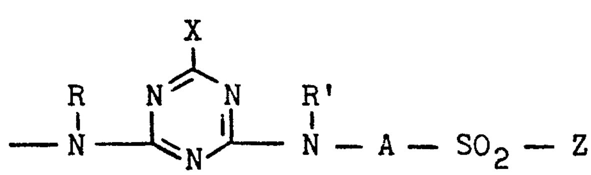

ist, in welcher X für ein Chlor- oder Fluoratom steht, R ein Wasserstoffatom oder eine Alkylgruppe von 1 bis 4 C-Atomen ist, Z eine ß-Sulfatoethylsulfonyl-, ß-Chlorethylsulfonyl-, ß-Thiosulfatoethylsulfonyl-, ß-Acetyloxyethylsulfonyl- oder Vinylsulfonyl-Gruppe ist, R' ein Wasserstoffatom oder eine Alkylgruppe von 1 bis 4 C-Atomen bedeutet oder eine Gruppe der allgemeinen Formel

$$- \text{alkylen} - SO_2 - Z$$

ist, in welcher "alkylen" eine Alkylengruppe von 1 bis 6 C-Atomen bedeutet und Z eine der obengenannten Bedeutungen hat und A eine Alkylengruppe von 1 bis 6 C-Atomen darstellt oder ein Phenylenrest ist, der durch 1 oder 2 Substituenten aus der Gruppe Sulfo, Carboxy, Chlor, Methyl, Ethyl, Methoxy und Ethoxy substituiert sein kann, oder ein Naphthylenrest ist, der durch 1 oder 2 Sulfogruppen substituiert sein kann.

7. Verfahren nach Anspruch 5, dadurch gekennzeichnet, daß der faserreaktive Rest ein Rest der allgemeinen Formel

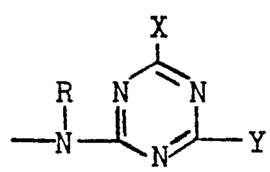

ist, in welcher X ein Chlor- oder Fluoratom bedeutet und Y eine Gruppe der allgemeinen Formel $-O-R^1$ oder $-NR^2R^3$ ist, in welchen $R^1$ für eine Alkylgruppe von 1 bis 4 C-Atomen steht, $R^2$ ein Wasserstoffatom oder eine Alkylgruppe von 1 bis 4 C-Atomen ist, die durch eine Hydroxy-, Sulfato-, Sulfo-, Carboxy- oder Cyanogruppe substituiert sein kann, und $R^3$ ein Wasserstoffatom oder eine Alkylgruppe bedeutet, die durch eine Hydroxy-, Sulfato-, Sulfo-, Carboxy-, Cyano-, Phenyl- oder Sulfophenylgruppe substituiert sein kann, oder einen Phenylrest bedeutet, der durch 1 oder 2 Substituenten aus der Gruppe Sulfo, Carboxy, Chlor, Methyl, Ethyl, Methoxy und Ethoxy substituiert sein kann.

8. Verfahren nach einem der Ansprüche 1 bis 3, dadurch gekennzeichnet, daß der Farbstoff einen faserreaktiven Rest der Vinylsulfonreihe und, an anderer Stelle des Farbstoffmoleküls gebunden, einen zweiten faserreaktiven Rest aus der Chlor- oder Fluor-s-triazin-Reihe enthält.

9. Verfahren nach Anspruch 8, dadurch gekennzeichnet, daß die beiden faserreaktiven Gruppen Gruppen der allgemeinen Formeln

$-SO_2-Z$ und 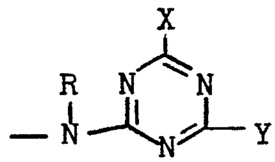

sind, in welchen R, X, Y und Z eine der in den obigen Ansprüchen angegebenen Bedeutungen haben.

10. Verfahren nach einem der Ansprüche 1 bis 3, dadurch gekennzeichnet, daß der Farbstoff einen Rest der allgemeinen Formel

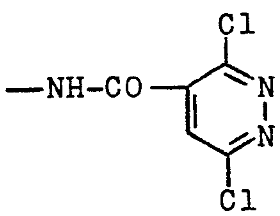 oder 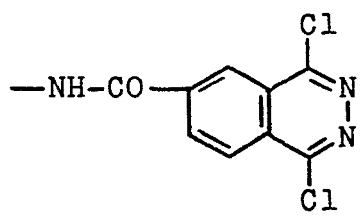

enthält.

11. Verfahren nach einem der Ansprüche 1 bis 3, dadurch gekennzeichnet, daß der Farbstoff eine Gruppe der Formel

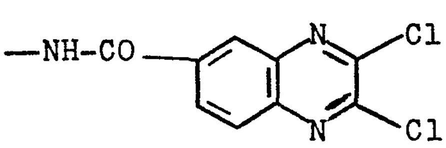

enthält.

12. Verfahren nach einem der Ansprüche 1 bis 3, dadurch gekennzeichnet, daß der Farbstoff einen oder zwei faserreaktive Gruppen enthält, die aus den Resten der allgemeinen Formeln (4k), (4m) und (4n)

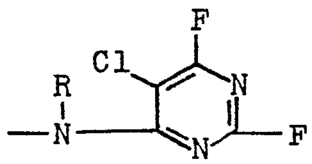
(4k)

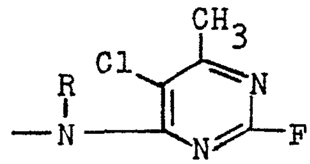
(4m)

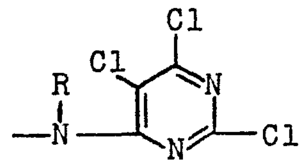
(4n)

in welchen R für ein Wasserstoffatom oder eine Alkylgruppe von 1 bis 4 C-Atomen steht, ausgewählt sind.

13. Verfahren nach einem der Ansprüche 1 bis 12, dadurch gekennzeichnet, daß man direkt von dem aus einer Synthese erhältlichen Calciumsalz des anionischen Farbstoffes ausgeht und es mit Lithiumsulfat oder Lithiumhydrogensulfat oder einem Gemisch derselben in jeweils äquivalenter Menge oder eines bis zu 10%igen Überschusses umsetzt.

14. Verfahren nach einem der Ansprüche 1 bis 13, dadurch gekennzeichnet, daß man eine wäßrige Lösung des Natrium- oder Kaliumsalzes des anionischen Farbstoffes mit einer wäßrigen Calciumchloridlösung oder mit Calciumchlorid selbst bei einer Temperatur zwischen 15 und 80°C versetzt, die Suspension des gebildeten Calciumsalzes des Farbstoffes abkühlt, das ausgefallene Produkt abtrennt, den Rückstand mit einer wäßrigen Calciumchloridlösung nachwäscht, das Calciumsalz des Farbstoffes sodann in Wasser aufschlämmt oder suspendiert und mit der äquivalenten Menge an Lithiumsulfat und/oder Lithiumhydrogensulfat bei einer Temperatur zwischen 10 und 50°C, vorzugsweise zwischen 10 und 30°C, umsetzt, und das abgeschiedene Calciumsulfat von der wäßrigen Lösung des Lithiumsalzes des anionischen Farbstoffes abtrennt.

15. Verfahren nach einem der Ansprüche 1 bis 14, dadurch gekennzeichnet, daß man als Lithium-Farbstoffsalz den Azofarbstoff der Formel

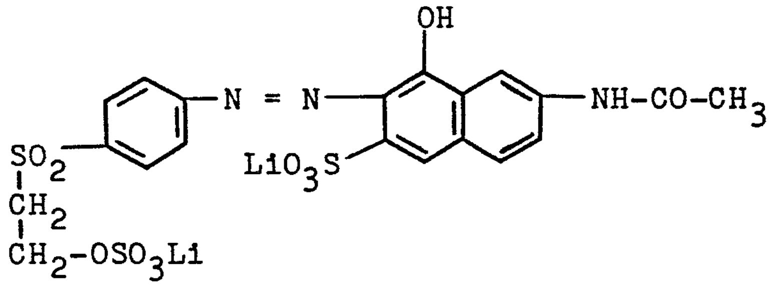

herstellt.